# EUROPEAN PATENT APPLICATION

(11) **EP 4 844 820 A1**
(43) Date of publication of application: **25.11.2026**
(21) Application number: 25741761.8
(22) Date of filing: 09.01.2025
(51) Int. Cl.: H01M 4/131, H01M 4/62, H01M 4/505, H01M 4/525, H01M 4/1391

(54) **POSITIVE ELECTRODE FOR SECONDARY BATTERY, METHOD FOR MANUFACTURING SAME, AND NONAQUEOUS ELECTROLYTE SECONDARY BATTERY**

(30) Priority: 17.01.2024 JP 2024005064
(71) Applicant: Panasonic Intellectual Property Management Co., Ltd., Kadoma-shi, Osaka 571-0057 (JP)
(72) Inventor: OKAZAKI, Keita, kadoma-shi, Osaka 571-0057 (JP); ISHIKAWA, Takayuki, kadoma-shi, Osaka 571-0057 (JP); MINEGISHI, Shuya, kadoma-shi, Osaka 571-0057 (JP)
(74) Representative: Novagraaf International SA
(86) International application number: PCT/JP2025/000453
(87) International publication number: WO 2025/154629

(57) **Abstract**

A positive electrode for a secondary battery contains a positive electrode mixture containing a positive electrode active material and a binder. The positive electrode active material includes a lithium-containing composite oxide containing at least Ni. In the lithium-containing composite oxide, the proportion of Ni among metal elements other than Li is 80 at.% or more. The lithium-containing composite oxide contains an alkali component in an amount of 0.2% by mass or more and 0.5% by mass or less. The binder includes a fluorine-containing polymer. The degree of polyene formation of the fluorine-containing polymer is 0.2 or less.

## Description

### [Cross-Reference to Related Applications]

The present disclosure is based on and claims priority under 35 U.S.C. §119 to Japanese Patent Application No. 2024-005064, filed on January 17, 2024, of which entire content is incorporated herein by reference into the present description.

### [Technical Field]

The present disclosure relates to a positive electrode for a secondary battery, a production method thereof, and a nonaqueous secondary battery.

### [Background Art]

Patent Literature 1 proposes "a sodium-ion secondary battery including a positive electrode, a negative electrode, a separator disposed between the positive electrode and the negative electrode, and a nonaqueous electrolyte having sodium ion conductivity, wherein the positive electrode contains positive electrode active material particles, a conductive agent, and a binder, the positive electrode active material particles include oxide particles that absorb and release sodium ions and coating layers that coat the oxide particles, the oxide particles contain an oxide A containing Ni and Mn, the coating layers contain at least one material B selected from the group consisting of ceramics and carbonaceous materials, and the binder includes a fluorocarbon resin."

Patent Literature 2 proposes "a positive electrode for a sodium-ion secondary battery containing a positive electrode active material that absorbs and releases sodium ions, a conductive agent, a binder, and a carboxylic acid, wherein the binder includes a vinylidene fluoride-based polymer, the carboxylic acid has at least one of a boiling point and a thermal decomposition point, and the lower one of the boiling point and the thermal decomposition point exceeds 150°C."

Patent Literature 3 proposes "a lithium-ion secondary battery including a positive electrode including a positive electrode mixture layer containing a layered lithium nickel composite oxide with a proportion of nickel to the metals other than lithium is 80 mol% or more, LiOH, Li₂CO₃, and a chlorine-containing polyvinylidene fluoride-based polymer, wherein the content of LiOH in the positive electrode mixture layer and the content of Li₂CO₃ in the positive electrode mixture layer each are 0.1 wt% or more and 2.1 wt% or less, the total content of LiOH and Li₂CO₃ in the positive electrode mixture layer is 0.2 wt% or more and 4.2 wt% or less, and the content of chlorine in the positive electrode mixture layer is 30 µg/g or more and 120 µg/g or less."

### [Citation List]

### [Patent Literature]

Patent Literature 1: Japanese Laid-Open Patent Publication No. 2017-107713
Patent Literature 2: International Publication No. 2016/021405
Patent Literature 3: International Publication No. 2019/088171

### [Summary of Invention]

### [Technical problem]

Due to a lithium-containing composite oxide with a high Ni content having high alkalinity, alkali components leach from the lithium-containing composite oxide when mixed with a liquid medium in preparation of a positive electrode slurry. The alkali components react with a fluorine-containing polymer contained as a binder in the positive electrode mixture to thicken the positive electrode slurry obtained by dispersing the positive electrode mixture in a liquid medium. Thickening of the positive electrode slurry causes, for example, a decrease in productivity due to poor liquid transfer, an increase in material loss, and variations in positive electrode quality.

It is possible to partially remove the alkali components by washing the lithium-containing composite oxide with water. However, water washing causes degradation of the lithium-containing composite oxide. From the viewpoint of avoiding degradation as much as possible, it is difficult to sufficiently remove the alkali components by water washing.

Although it is conceivable to form "coating layers that coat the oxide particles" as in Patent Literature 1, the coating layers increase the resistance of the positive electrode. As such, there is room for improvement.

### [Solution to Problem]

One aspect of the present disclosure relates to a positive electrode for a secondary battery including: a positive electrode mixture containing a positive electrode active material and a binder, wherein the positive electrode active material includes a lithium-containing composite oxide containing at least Ni, in the lithium-containing composite oxide, a proportion of Ni among metal elements other than Li is 80 at.% or more, the lithium-containing composite oxide contains an alkali component in an amount of 0.2% by mass or more and 0.5% by mass or less, the binder includes a fluorine-containing polymer, and a degree of polyene formation of the fluorine-containing polymer is 0.2 or less.

Another aspect of the present disclosure relates to a nonaqueous secondary battery including: the above-described positive electrode for a secondary battery; a negative electrode; a separator; and a nonaqueous electrolyte.

Still another aspect of the present disclosure relates to a method for producing a positive electrode for a secondary battery, including: preparing a positive electrode slurry containing a liquid medium and a positive electrode mixture dispersed in the liquid medium; preparing a positive electrode current collector and forming a coated film of the positive electrode slurry on a surface of the positive electrode current collector; and heating and drying the coated film at 200°C or lower, wherein the positive electrode mixture contains a positive electrode active material, a binder, and an organic additive containing a heteroatom, the positive electrode active material includes a lithium-containing composite oxide containing at least Ni, in the lithium-containing composite oxide, a proportion of Ni among metal elements other than Li is 80 at.% or more, the lithium-containing composite oxide contains an alkali component in an amount of 0.2% by mass or more and 0.5% by mass or less, and the binder includes a fluorine-containing polymer.

### [Advantageous Effects of Invention]

According to the present disclosure, both degradation of the lithium-containing composite oxide and the thickening of the positive electrode slurry can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

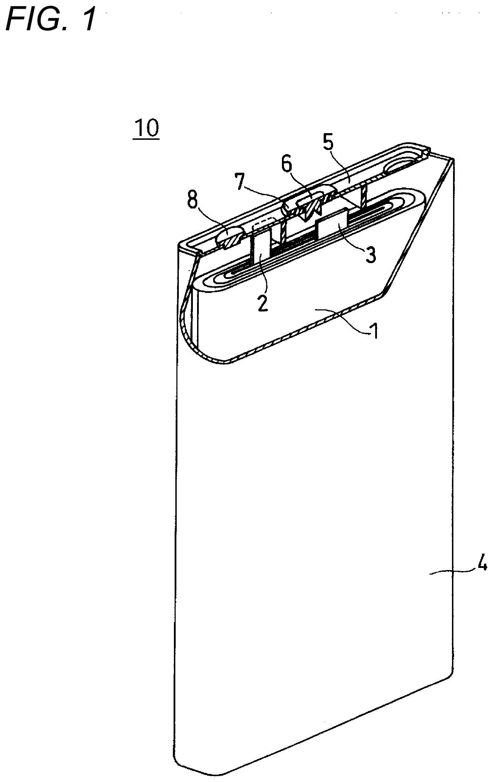

[FIG. 1] FIG. 1 is a schematic partially cut-away perspective view of a nonaqueous electrolyte secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples in the following description, one type thereof may be selected and used singly, or two or more types thereof may be selected and used in combination, unless otherwise specifically stated.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

Examples of nonaqueous electrolyte secondary batteries include lithium-ion secondary batteries using liquid nonaqueous electrolytes, solid-state batteries containing gel electrolytes, and all-solid-state batteries using solid electrolytes.

A nonaqueous electrolyte secondary battery includes a positive electrode, a negative electrode, and a nonaqueous electrolyte. Usually, a separator is disposed between the positive electrode and the negative electrode.

### (Positive Electrode)

A positive electrode according to the present disclosure contains a positive electrode mixture containing a positive electrode active material and a binder. The positive electrode mixture may further contain a conductive material. Usually, the positive electrode mixture is supported on a positive electrode current collector and forms a positive electrode mixture layer. The positive electrode mixture layer is formed on a surface of the positive electrode current collector.

The positive electrode current collector is made of a sheet-shaped conductive material. As the positive electrode current collector, a non-porous conductive substrate (e.g., a metal foil), or a porous conductive substrate (e.g., a mesh, a net, or a punched sheet) is used. The positive electrode mixture layer is supported as a film on one or both surfaces of the positive electrode current collector. The material of the positive electrode current collector is not particularly limited, and stainless steel, aluminum, an aluminum alloy, or titanium can be used, for example.

The positive electrode active material includes a lithium-containing composite oxide containing at least Ni. From the viewpoint of increasing capacity, the proportion of Ni among the metal elements other than Li in the lithium-containing composite oxide is 80 at.% or more. Among all, the lithium-containing composite oxide is desirably a lithium nickel oxide (hereinafter also referred to as "composite oxide N") that contains Li and Ni, in which the proportion of Ni among the metal elements other than Li is 80 at.% or more, and that has a layered rock-salt crystal structure. The proportion of Ni among the metal elements other than Li may be 88 at.% or more, 90 at.% or more, or 95 at.% or more. In the composite oxide N, the proportion of Ni among the metal elements other than Li is less than 100 at.%, and may be 99 at.% or less or 98 at.% or less.

The positive electrode active material may contain another material, but the proportion of the composite oxide N in the positive electrode active material is, for example, 70% by mass or more, and may be 90% by mass or more, 95% by mass or more, or 100%.

The composite oxide N with a high Ni content contains an alkali component. The composite oxide N in which a proportion of Ni among the metal elements other than Li is 90 at.% or more has particularly high alkalinity. When the alkalinity of a synthesized composite oxide N (before water washing) is higher than a tolerable range, a portion of the alkali component may be removed by water washing to an extent that allows acceptable degradation. However, the composite oxide N with a high Ni content can contain an alkali component regardless of before or after water washing. The alkali component can be, for example, LiOH or Li₂CO₃, and the main cause of the thickening of the positive electrode slurry is a strong alkali (mainly LiOH) in most cases.

When the composite oxide N is mixed with a liquid medium (dispersion medium), the alkali component leaches into the liquid medium. When the composite oxide N contains the alkali component in an amount of 0.2% by mass or more, the positive electrode slurry usually thickens significantly in preparation of the positive electrode slurry. Thickening occurs due to polyene formation by reaction of a fluorine-containing polymer contained as a binder in the positive electrode mixture with the alkali component. Polyene formation refers to a phenomenon in which a fluorine-containing polymer generates double bonds, and the polyenized fluorine-containing polymer promotes gelation of the positive electrode slurry over time. Since significant thickening due to gelation of the positive electrode slurry needs to be avoided, conventional positive electrode mixtures do not contain 0.2% by mass or more of alkali components.

In contrast, the composite oxide N contained in the positive electrode mixture according to the present disclosure contains 0.2% by mass or more and 0.5% by mass or less of an alkali component. The thickening of the positive electrode slurry is suppressed by an organic additive containing a heteroatom in the positive electrode mixture in the positive electrode slurry. The organic additive containing a heteroatom (hereinafter also simply referred to as "organic additive") is attached to the surface of the composite oxide N via the heteroatom. As a result, the contact between the surface of the composite oxide N and the liquid medium is suppressed, leaching of the alkali component is suppressed, and the reaction between the fluorine-containing polymer and the alkali component is suppressed. Therefore, the degree of polyene formation of the fluorine-containing polymer contained in the positive electrode mixture layer (positive electrode mixture) peeled off from the positive electrode current collector is small, being 0.2 or less. The degree of polyene formation of the fluorine-containing polymer is preferably 0.17 or less, and more preferably 0.15 or less.

The content of the alkali component in the composite oxide N may be, for example, 0.25% by mass or more and 0.4% by mass or less, or 0.25% by mass or more and 0.35% by mass or less. When the composite oxide N contains the alkali component in an amount of more than 0.5% by mass, it becomes difficult to suppress the thickening of the positive electrode slurry even when the organic additive is used.

The degree of polyene formation of the fluorine-containing polymer can be determined by the following method.

A sample equivalent to 20 g of the positive electrode mixture layer (positive electrode mixture) peeled off from the positive electrode current collector is weighed out and mixed with 10 mL of N-methyl-2-pyrrolidone (hereinafter also referred to as "NMP") to obtain a mixed liquid. The positive electrode active material is removed by centrifugation of the mixed liquid at 8000 rpm for 0.5 hours. Next, the conductive material is removed by ultracentrifugation at 80000 rpm for 11 hours and ultracentrifugation at 80000 rpm for 4 hours to obtain an NMP solution of the fluorine-containing polymer. A film of the fluorine-containing polymer is obtained from the NMP solution of the fluorine-containing polymer by a casting method. The film is dried under reduced pressure at 60°C for 2 hours. The resulting film is measured using a Raman spectrometer. After baseline correction, the intensity ratio (P1/P2) of a peak P1 observed near 1130 cm⁻¹ and derived from C=C bonds and a peak P2 observed near 2980 cm⁻¹ and derived from CH₂ is calculated as the degree of polyene formation.

The content of an alkali component in the composite oxide N can be determined by the following method.

A sample equivalent to 1.0 g of the positive electrode mixture layer (positive electrode mixture) peeled off from the positive electrode current collector is weighed out, mixed with 30 mL of ion-exchanged water, and shaken and melted for 30 seconds to obtain a sample liquid containing a leached alkali component. Thereafter, the sample liquid is filtered and titrated with hydrochloric acid at a concentration of 1 mol/L in an N₂ atmosphere until the pH reached 8.4. The mass of LiOH, which is the alkali component, is calculated from the amount of hydrochloric acid needed for titration, and the proportion of the mass of LiOH to the sum of the mass of the composite oxide N contained in the sample and that of the alkali component is calculated. Note that the region where the pH is less than 8.4 is a titration region for weak alkalis such as Li₂CO₃.

Due to having a flexible organic chain, the organic additive is unlikely to inhibit battery reactions, even when it is attached to the surface of the composite oxide N. Therefore, the organic additive has a slight effect on the resistance of the positive electrode. In addition, the organic additive, which has low heat resistance, can be removed from the positive electrode mixture by thermal decomposition or the like during the positive electrode manufacturing processes. The positive electrode mixture layer (positive electrode mixture) peeled off from the positive electrode current collector may or may not contain an organic additive containing a heteroatom. From the viewpoint of significantly suppressing an increase in the resistance of the positive electrode, the smaller the content of the organic additive in the positive electrode mixture is, the more preferred it is.

When the positive electrode mixture layer (positive electrode mixture) peeled off from the positive electrode current collector contains the organic additive, the proportion of the mass of the organic additive to that of the composite oxide N is preferably 0.1% by mass or less, more preferably 0.07% by mass or less, still more preferably 0.05% by mass or less or 0.03% by mass or less, and may be 0.01% by mass or less. The proportion of the mass of the organic additive to that of the composite oxide N may be 0.005% by mass or more, for example.

The proportion of the mass of the organic additive to that of the composite oxide N can be calculated from the measurement results of thermogravimetric analysis (TGA) of a sample of the positive electrode mixture layer (positive electrode mixture) peeled off from the positive electrode current collector, and the mass of the composite oxide N contained in the sample. TGA may be performed under atmospheric conditions of 5°C/min.

The decomposition temperature (thermal decomposition temperature) of the organic additive is preferably 200°C or lower, and more preferably 180°C or lower. The decomposition temperature can be measured by TGA under atmospheric conditions of 5°C/min. An organic additive with a decomposition temperature of 200°C or lower is likely to be removed from the positive electrode mixture by thermal decomposition or the like during the positive electrode manufacturing processes. Therefore, it becomes easy to reduce the proportion of the mass of the organic additive to that of the composite oxide N in the positive electrode mixture layer included in a completed positive electrode.

The organic additive may be a Lewis base. Among Lewis bases, a Lewis base having nitrogen (N) as a heteroatom is particularly preferred. It is considered that the lone pairs of nitrogen is adsorbed to the Lewis acid site on the surface of the composite oxide N. In particular, a Lewis base having, in a molecule thereof, a plurality of nitrogen atoms having a lone pair is preferred in that the number of reaction sites increases. Among Lewis bases having nitrogen as a heteroatom, a Lewis base having a nitrogen-containing heterocycle is particularly preferred. The nitrogen-containing heterocycle is preferably, for example, a 5-membered ring, a 6-membered ring, or a 7-membered ring, and preferably has two or more nitrogen atoms. Note that the heteroatom is not limited to N, and may be S, P, or O, for example. The organic additive can contain N and a heteroatom other than N as heteroatoms.

The nitrogen-containing heterocycle may be a saturated ring having no double bond, but preferably has aromaticity. A nitrogen-containing heterocycle having aromaticity may contain one or more nitrogen atoms in the ring, but may contain two or more. Preferable examples of the nitrogen-containing heterocycle include a pyrazole ring, an imidazole ring, a diazine ring, a triazine ring, and a diazepine ring.

The organic additive preferably has an acyclic organic group in order to effectively suppress the contact between the liquid medium and the surface of the composite oxide N. For example, the organic additive may have an acyclic organic group bonded to a ring atom of the nitrogen-containing heterocycle. The number of carbon atoms of such an organic group may be, for example, 1 to 50, or may be 5 to 20.

The molecular weight of the organic additive may be, for example, 50 or more and 1000 or less, may be 100 or more and 800 or less, or may be 100 or more and 500 or less. An organic additive having such a molecular weight has a low thermal decomposition temperature and has a size sufficient to effectively suppress the contact between the liquid medium and the surface of the composite oxide N.

The composite oxide N may further contain Co and Mn. Co and Mn contribute to stabilization of the crystal structure of the composite oxide N. Since the composite oxide N containing Co and Mn has very high alkalinity and is significantly degraded by water washing, the role of the organic additive is particularly important.

From the viewpoint of cost reduction and capacity increase, the proportion of Co among the metal elements other than Li in the composite oxide N is desirably 0 at.% or more and 20 at.% or less, and more desirably more than 0 at.% and 5 at.% or less.

From the viewpoint of cost reduction, the proportion of Mn among the metal elements other than Li in the composite oxide N may be 1 at.% or more and 10 at.% or less, may be 2 at.% or more and 5 at.% or less, or may be 3 at.% or more and 5 at.% or less.

The composite oxide N may further contain Al. Al contributes to stabilization of the crystal structure of the composite oxide N. Since a composite oxide N containing Co, Mn, and Al has very high alkalinity, the role of the organic additive is particularly important.

The proportion of Al among the metal elements other than Li in the composite oxide N may be 0.1 at.% or more and 5 at.% or less, may be 0.2 at.% or more and 3 at.% or less, or may be 0.5 at.% or more and 1 at.% or less.

The composite oxide N can be represented by, for example, the formula: Li_{y}NiₓM₍₁₋ₓ₎O_{2-δ}, where 0.8 ≤ x ≤ 1, 0 < y ≤ 1.2, and -0.05 ≤ δ ≤ 0.05. Here, the element M may include at least one element selected from the group consisting of Co, Mn, Al, Fe, Ti, Sr, Ca, Zr, W, and B. x representing the atomic ratio of Ni may be 0.98 or less, or may be 0.95 or less. x increases or decreases by charging and discharging of the secondary battery.

The element M can be represented by the formula: Co_{1-x-a-b}MnₐAl_{b}, where 0 < a < 0.05 and 0 < b < 0.05.

The thickness of the positive electrode mixture layer is not particularly limited, and may be, for example, 50 µm or more and 150 µm or less, or may be 75 µm or more and 125 µm or less. A single positive electrode active material layer may be formed of a plurality of layers having forms different from each other. For example, two or more layers containing positive electrode active materials having different average particle diameters may be layered. Alternatively, two or more layers having different types or compositions of positive electrode active materials may be layered.

The average particle diameter (D50) of the particles of the composite oxide N is, for example, 1 µm or more and 50 µm or less, and may be 5 µm or more and 25 µm or less. The average particle diameter (D50) refers to the median diameter when the cumulative volume reaches 50% in the volume-based particle size distribution. The volume-based particle size distribution can be measured using a commercially available laser diffraction scattering particle size distribution analyzer.

The average particle diameter of the composite oxide N may be measured from a cross section of the positive electrode mixture layer. It is possible that an SEM image of a cross section is captured so that 10 or more particles of the composite oxide N are observed, the equivalent-circle diameters, having the same areas as the corresponding particle cross sections, are obtained by image processing for the 10 or more particles of the composite oxide N in the cross section, and the average value thereof is taken as the average particle diameter.

The fluorine-containing polymer functioning as a binder includes a vinylidene fluoride-based polymer. Examples of the vinylidene fluoride-based polymer include polymers of monomers including vinylidene fluoride. The fluorine-containing polymer may be a combination of the vinylidene fluoride-based polymer and another fluorine-containing polymer. The vinylidene fluoride-based polymer may be a copolymer of vinylidene fluoride and another monomer. Examples of the vinylidene fluoride-based polymer include polyvinylidene fluoride (PVDF) and vinylidene fluoride-hexafluoropropylene copolymers. The vinylidene fluoride-based polymer preferably contains a monomer unit derived from vinylidene fluoride in an amount of 90 mol% or more. The degree of polyene formation of the fluorine-containing polymer before being mixed with the positive electrode slurry is usually 0.1 or less.

The amount of the fluorine-containing polymer relative to 100 parts by mass of the positive electrode active material in the positive electrode mixture may be 0.1 parts by mass or more or 0.5 parts by mass or more, and may be 2.0 parts by mass or less or 1.2 parts by mass or less.

The weight average molecular weight of the fluorine-containing polymer may be 0.8 million or more, 1 million or more, or 1.2 million or more, and may be 2 million or less, or 1.8 million or less. As a result of the weight average molecular weight being set to 1 million or more, a significant binder effect can be obtained with a small amount thereof.

The conductive material that can be contained as an optional component in the positive electrode mixture layer is not particularly limited, and a known conductive material may be used. Among all, a carbonaceous material having conductivity is preferred. Examples of the carbonaceous material having conductivity include conductive carbon particles such as carbon black and graphite, carbon nanotubes (CNTs), and carbon fibers other than CNTs.

The positive electrode slurry may contain a component other than those described above as necessary. For example, the positive electrode slurry may contain a binder other than the fluorine-containing polymer. Examples of such a binder include hydrogenated nitrile butadiene rubber.

### (Positive Electrode Production Method)

The following describes an example of a method for producing the positive electrode for a secondary battery according to the present disclosure (hereinafter, also referred to as "production method (M)"). The production method (M) includes a first step of preparing a positive electrode slurry, and a second step of forming a positive electrode mixture layer on a positive electrode current collector with the positive electrode slurry. The second step includes a step of preparing the positive electrode current collector and forming a coated film of the positive electrode slurry on a surface of the positive electrode current collector, and a step of heating and drying the coated film.

The positive electrode slurry prepared in the first step of the production method (M) contains a liquid medium and a positive electrode mixture dispersed in the liquid medium. As the positive electrode mixture, the positive electrode mixture described above is used. For example, the positive electrode slurry can be prepared by mixing a positive electrode active material, a fluorine-containing polymer, an organic additive, a liquid medium, and a conductive material. The positive electrode active material includes a composite oxide N. The positive electrode slurry can be prepared by mixing the positive electrode mixture with the liquid medium. The organic additive may be mixed with another component as a solution previously dissolved in the liquid medium. The mixing method is not particularly limited, and a known mixing method may be used.

An organic solvent or water can be used as the liquid medium. N-methyl-2-pyrrolidone (NMP) is preferred as the organic solvent, but an alcohol such as ethanol, an ether such as tetrahydrofuran, an amide such as dimethylformamide, or a ketone such as cyclohexanone may be used.

The organic additive is used for the purpose of suppressing the thickening of the positive electrode slurry. Therefore, it is sufficient that the organic additive is contained in the positive electrode slurry, and it is not required that the organic additive be contained in the positive electrode mixture layer. In order to effectively suppress the thickening of the positive electrode slurry, the proportion of the mass of the organic additive to that of the lithium-containing composite oxide in the positive electrode slurry is set to, for example, preferably 0.002% by mass or more and 0.3% by mass or less, more preferably 0.02% by mass or more and 0.3% by mass or less, or may be set to 0.1% by mass or more and 0.25% by mass or less.

The step of forming a coated film of the positive electrode slurry on the surface of the positive electrode current collector in the second step can be performed, for example, using a coating apparatus such as a bar coater, a gravure coater, a blade coater, a roll coater, a comma coater, a die coater, or a lip coater. It is possible that a plurality of positive electrode slurries having different compositions are prepared and these slurries are applied in two or more layers.

In the second step, the coated film drying step is preferably performed at 200°C or lower, and the coated film may be dried at a temperature of, for example, 150°C or higher, or even 180°C or higher. Through the coated film drying step, the liquid medium is volatilized to form an unrolled coated film. At least a portion of the organic additive can be decomposed or evaporated in the coated film drying step to be removed from the unrolled coated film.

Usually, an unrolled coated film rolling step is performed thereafter to form a positive electrode mixture layer. The rolling conditions are not particularly limited. The density of the positive electrode active material in the positive electrode mixture layer is, for example, 3.3 g/cm³ or more and 4.0 g/cm³ or less, and may be 3.5 g/cm³ or more and 4.0 g/cm³ or less.

The positive electrode mixture layer may be formed on only one surface of the positive electrode current collector or on both surfaces of the positive electrode current collector, according to the configuration of the battery.

### (Nonaqueous Electrolyte Secondary Battery)

The following describes a battery (hereinafter, also referred to as "secondary battery (B)") as an example of a nonaqueous electrolyte secondary battery according to the present disclosure. The secondary battery (B) includes the above-described positive electrode, a negative electrode, a separator, and a nonaqueous electrolyte.

The positive electrode mixture layer included in the positive electrode of the secondary battery (B) can contain an organic additive attached to the surface of the composite oxide N, but the amount thereof is minuscule. The proportion of the mass of the organic additive to that of the composite oxide N is 0.1% by mass or less, for example. Accordingly, the organic additive remaining in the positive electrode mixture layer hardly increases the resistance of the positive electrode.

Components other than the positive electrode are not particularly limited, and components used in known nonaqueous electrolyte secondary batteries may be applied. Examples of the components of the secondary battery (B) are described below.

### (Positive Electrode)

The positive electrode described above is used as the positive electrode.

### (Negative Electrode)

The negative electrode only needs to include at least a negative electrode current collector. In the case of a lithium-metal secondary battery, a negative electrode current collector on which lithium metal or lithium alloy can deposit is used in the negative electrode. In the case of a lithium-ion secondary battery, the negative electrode typically contains a negative electrode mixture containing a negative electrode active material. The negative electrode mixture is supported on the negative electrode current collector and forms a negative electrode mixture layer. The negative electrode mixture layer is formed on a surface of the negative electrode current collector.

The negative electrode mixture contains a negative electrode active material as an essential component. The negative electrode mixture may contain, for example, a binder, a thickener, and a conductive material as optional components. The components exemplified as the components of the positive electrode may be used as the corresponding optional components.

The negative electrode mixture layer may be formed by applying a negative electrode slurry, in which the constituent components of the negative electrode mixture are dispersed in a liquid medium (dispersion medium), onto the surface of the negative electrode current collector and drying the slurry. The coated film after drying may be rolled, if necessary. Any liquid medium exemplified as the liquid medium for the positive electrode slurry may be used as the liquid medium.

### (Negative Electrode Active Material)

The negative electrode active material is selected according to the type of the secondary battery (B). Examples of the negative electrode active material include materials capable of absorbing and releasing lithium ions. Examples of the materials such as above include carbonaceous materials and Si-containing materials. The negative electrode active material may contain an Si-containing material or may be an Si-containing material. Metallic lithium, a lithium alloy, or the like may be used as the negative electrode active material. The negative electrode may contain one type of negative electrode active material or may contain two or more types in combination.

Examples of the carbonaceous materials include graphite, graphitizable carbon (soft carbon), and non-graphitizable carbon (hard carbon). One type of carbonaceous material may be used alone or two or more types thereof may be used in combination. Graphite is preferred due to having excellent stability during charging and discharging and small irreversible capacity. Examples of graphite include natural graphite, artificial graphite, and graphitized mesophase carbon particles.

Examples of the Si-containing materials include Si alone, silicon alloys, silicon compounds (e.g., silicon oxides), and composite materials in which silicon phases are dispersed in a lithium ion conductive phase (matrix). Examples of the silicon oxides include SiOₓ particles. x satisfies, for example, 0.5 ≤ x < 2, and may satisfy 0.8 ≤ x ≤ 1.6. As the lithium ion conductive phase, at least one selected from the group consisting of an SiO₂ phase, a silicate phase, and a carbon phase may be used.

A metal foil may be used as the negative electrode current collector. The negative electrode current collector may be porous. Examples of the material of the negative electrode current collector include stainless steel, nickel, nickel alloys, copper, and copper alloys.

### (Nonaqueous Electrolyte)

The nonaqueous electrolyte contains a solvent (nonaqueous solvent) and a solute dissolved in the solvent. Examples of the solute include a lithium salt. Various additives may be added to the nonaqueous electrolyte.

Any known material can be used as the solvent. For example, a cyclic carbonate ester, a chain carbonate ester, a cyclic carboxylic acid ester, or a chain carboxylic acid ester, is used as the solvent. Examples of the cyclic carbonate ester include propylene carbonate (PC), ethylene carbonate (EC), fluoroethylene carbonate (FEC), and vinylene carbonate (VC). Examples of the chain carbonate ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include nonaqueous solvents of, for example, methyl acetate, ethyl acetate, propyl acetate, methyl propionate (MP), and ethyl propionate (EP). One type of nonaqueous solvent may be used alone, or two or more types thereof may be used in combination.

Examples of the lithium salt include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN(FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). One type of lithium salt may be used alone, or two or more types thereof may be used in combination.

The concentration of the lithium salt in the nonaqueous electrolyte may be 1 mol/L or more and 2 mol/L or less, or may be 1 mol/L or more and 1.5 mol/L or less. By controlling the concentration of the lithium salt within the above range, an electrolyte solution having excellent ionic conductivity and moderate viscosity can be obtained.

The nonaqueous electrolyte may contain a known additive. Examples of the additive include 1,3-propanesultone, methylbenzenesulfonate, cyclohexylbenzene, biphenyl, diphenyl ether, and fluorobenzene.

### (Separator)

The separator is disposed between the positive electrode and the negative electrode. The separator preferably has high ionic permeability and moderate mechanical strength and insulating properties. The separator may be, for example, a microporous thin film, a woven fabric, or a nonwoven fabric. Examples of the material of the separator include polyolefins (e.g., polypropylene and polyethylene) and other resins.

### (Outer Housing)

An electrode group and the nonaqueous electrolyte are housed in an outer housing (battery case). The outer housing is not particularly limited, and a known outer housing may be used. The electrode group is composed of the positive electrode, the negative electrode, and the separator. The configuration of the electrode group is not particularly limited, and may be of a wound type or a stacked type. An electrode group of a wound type is formed by winding the positive electrode and the negative electrode with the separator interposed therebetween. An electrode group of a stacked type is formed by stacking the positive electrode and the negative electrode with the separator interposed therebetween. The form of the nonaqueous electrolyte secondary battery is not particularly limited, and may be cylindrical, prismatic, coin-shaped, button-shaped, or laminate-type, for example.

FIG. 1 is a schematic partially cut-away perspective view of a secondary battery 10 according to an embodiment of the present disclosure. FIG. 1 illustrates a prismatic nonaqueous electrolyte battery as an example. The secondary battery 10 illustrated in FIG. 1 includes a bottomed rectangular tubular battery case 4, and an electrode group 1 and a nonaqueous electrolyte (not illustrated) housed in the battery case 4.

The electrode group 1 includes an elongated band-shaped negative electrode, an elongated band-shaped positive electrode, and a separator disposed therebetween. The positive electrode is the positive electrode described above. The negative electrode current collector of the negative electrode is electrically connected to a negative electrode terminal 6 provided on a sealing plate 5 via a negative electrode lead 3. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 which also serves as a positive electrode terminal. The periphery of the sealing plate 5 is fitted to the opening end of the battery case 4, and the fitting portion is laser welded. The sealing plate 5 has an injection hole for the nonaqueous electrolyte. The injection hole is closed by the sealing plug 8 after the nonaqueous electrolyte is injected.

### (Supplemental Note)

According to the above description of the embodiments, the following techniques are disclosed.

### (Technique 1)

A positive electrode for a secondary battery, including:
a positive electrode mixture containing a positive electrode active material and a binder,
wherein the positive electrode active material includes a lithium-containing composite oxide containing at least Ni,
in the lithium-containing composite oxide, a proportion of Ni among metal elements other than Li is 80 at.% or more,
the lithium-containing composite oxide contains an alkali component in an amount of 0.2% by mass or more and 0.5% by mass or less,
the binder includes a fluorine-containing polymer, and
a degree of polyene formation of the fluorine-containing polymer is 0.2 or less.

### (Technique 2)

The positive electrode for a secondary battery according to Technique 1, wherein the lithium-containing composite oxide further contains Co and Mn.

### (Technique 3)

The positive electrode for a secondary battery according to Technique 1 or 2, wherein the lithium-containing composite oxide further contains Al.

### (Technique 4)

The positive electrode for a secondary battery according to any one of Techniques 1 to 3, wherein the lithium-containing composite oxide is represented by a formula: Li_{y}NiₓM₍₁₋ₓ₎O_{2-δ}, where 0.8 ≤ x ≤ 1, 0 < y ≤ 1.2, and -0.05 ≤ δ ≤ 0.05, and
M includes at least one element selected from the group consisting of Co, Mn, Al, Fe, Ti, Sr, Ca, Zr, W, and B.

### (Technique 5)

The positive electrode for a secondary battery according to Technique 4, wherein M is represented by a formula: Co_{1-x-a-b}MnₐAl_{b}, where 0 < a < 0.05 and 0 < b < 0.05.

### (Technique 6)

The positive electrode for a secondary battery according to any one of Techniques 1 to 5, wherein the positive electrode mixture further contains an organic additive containing a heteroatom, and
a proportion of a mass of the organic additive to a mass of the lithium-containing composite oxide is 0.1% by mass or less.

### (Technique 7)

The positive electrode for a secondary battery according to Technique 6, wherein a decomposition temperature of the organic additive is 200°C or lower.

### (Technique 8)

The positive electrode for a secondary battery according to Technique 6 or 7, wherein the organic additive is a Lewis base.

### (Technique 9)

The positive electrode for a secondary battery according to any one of Techniques 6 to 8, wherein a molecular weight of the organic additive is 50 or more and 1000 or less.

### (Technique 10)

A nonaqueous secondary battery including: the positive electrode for a secondary battery according to any one of Techniques 1 to 9, a negative electrode, a separator, and a nonaqueous electrolyte.

### (Technique 11)

A method for producing a positive electrode for a secondary battery, including:
preparing a positive electrode slurry containing a liquid medium and a positive electrode mixture dispersed in the liquid medium;
preparing a positive electrode current collector and forming a coated film of the positive electrode slurry on a surface of the positive electrode current collector; and
heating and drying the coated film at 200°C or lower,
wherein the positive electrode mixture contains a positive electrode active material, a binder, and an organic additive containing a heteroatom,
the positive electrode active material includes a lithium-containing composite oxide containing at least Ni,
in the lithium-containing composite oxide, a proportion of Ni among metal elements other than Li is 80 at.% or more,
the lithium-containing composite oxide contains an alkali component in an amount of 0.2% by mass or more and 0.5% by mass or less, and
the binder includes a fluorine-containing polymer.

### (Technique 12)

The method for producing a positive electrode for a secondary battery according to Technique 11, wherein a decomposition temperature of the organic additive is 200°C or lower.

### (Technique 13)

The method for producing a positive electrode for a secondary battery, according to Technique 11 or 12, wherein the organic additive is a Lewis base.

### (Technique 14)

The method for producing a positive electrode for a secondary battery, according to any one of Techniques 11 to 13, wherein a molecular weight of the organic additive is 50 or more and 1000 or less.

### (Technique 15)

The method for producing a positive electrode for a secondary battery, according to any one of Techniques 11 to 14, wherein a proportion of a mass of the organic additive to a mass of the lithium-containing composite oxide is 0.002% by mass or more and 0.3% by mass or less.

### [Examples]

Hereinafter, the present disclosure is described further in detail based on examples and comparative examples. However, the present disclosure is not limited to the following examples.

### (Preparation of Positive Electrode Slurry A1)

Positive electrode slurry A1 was prepared by mixing a positive electrode active material, polyvinylidene fluoride (PVDF, fluorine-containing polymer), a pyrazole derivative (PZ1, Lewis base) having an acyclic organic group with 10 carbon atoms, acetylene black (conductive material), and NMP (liquid medium) in a predetermined mass ratio. The positive electrode active material, PVDF, PZ1, and the conductive material are constituent components of the positive electrode mixture. As the positive electrode active material, particles of the composite oxide N represented by the compositional formula LiNi_{0.9}Co_{0.04}Mn_{0.05}Al_{0.01}O₂ were used. In the positive electrode mixture, the positive electrode active material, PVDF, PZ1, and the conductive material were mixed in a mass ratio: positive electrode active material:PVDF:PZ:conductive material of 100:0.6:0.02:0.75.

The weight average molecular weight of the PVDF was 1.4 million. The molecular weight of the pyrazole derivative (PZ1) was approximately 200, and the thermal decomposition temperature of PZ1 was approximately 180°C.

### (Preparation of Positive Electrode Slurries A2 to A4, C1, and C2)

Positive electrode slurries A2, A3, C1, and C2 each were prepared in the same manner and under the same conditions as positive electrode slurry A1, except that the proportion of the mass of the organic additive to that of the composite oxide N in the positive electrode mixture layer of the corresponding completed positive electrodes was changed to the values shown in Table 1 by changing the type of the organic additive and the proportion of the mass thereof to that of the composite oxide N.

Positive electrode slurries C1 and C2 contain no organic additives. In addition, in positive electrode slurry C2, a composite oxide NX different from that used for the other positive electrode slurries was used. The composite oxide NX was sufficiently washed with water in advance to sufficiently remove alkali components, while permitting the degradation of the composite oxide NX to some extent.

In positive electrode slurry A4, the organic additive was changed from PZ1 to an amine derivative (PZ2, Lewis base) with a molecular weight of approximately 20,000 and a thermal decomposition temperature of approximately 400°C.

For each of the prepared positive electrode slurries, a viscosity µ0 on the day of preparation and a viscosity µ1 after 7 days from the preparation were measured. The viscosity increase rate was determined from the following formula. The viscosity increase rate of each positive electrode slurry is shown in Table 2. The lower the viscosity increase rate, the more favorable the electrode slurry.$" Viscosity increase rate \left(%\right) = 100 \times μ 1 / μ 0 "$

### (1) Positive Electrode Production

A coated film was formed by applying one of the above-described positive electrode slurries to the surfaces of an aluminum foil (positive electrode current collector), thereby obtaining a laminate of the aluminum foil and the coated film. Next, the coated film was dried at 180°C, and then the resulting laminate was rolled. In the manner described above, positive electrodes each including an aluminum foil and positive electrode mixture layers formed on both surfaces of the aluminum foil were produced. The positive electrodes produced using positive electrode slurries A1 to A4 are referred to as positive electrodes A1 to A4, respectively, and the positive electrodes produced using positive electrode slurries C1 and C2 are referred to as positive electrodes C1 and C2, respectively.

### < Measurement of Degree of Polyene Formation>

For each positive electrode, the positive electrode mixture layer (positive electrode mixture) was peeled from the positive electrode current collector. A sample equivalent to 20 g of the positive electrode mixture was weighed out and mixed with 10 mL of NMP, and an NMP solution of a fluorine-containing polymer (PVDF) was obtained from the resulting mixed liquid by the method described above. A film of the fluorine-containing polymer was formed from the NMP solution of PVDF by the method described above. The intensity ratio (P1/P2) of the peak P1 observed near 1130 cm⁻¹ and derived from C=C bonds to the peak P2 observed near 2980 cm⁻¹ and derived from CH₂ was calculated as the degree of polyene formation using a Raman spectrometer. Note that the degree of polyene formation of PVDF before being mixed into the positive electrode slurry was less than 0.01. The degree of polyene formation of PVDF contained in each positive electrode is shown in Table 1.

### <Measurement of Alkali Component Content in Composite Oxide N>

For each positive electrode, the positive electrode mixture layer (positive electrode mixture) was peeled off from the positive electrode current collector. A sample equivalent to 1.0 g of the positive electrode mixture was weighed out and mixed with 30 mL of ion-exchanged water, and a sample liquid containing a leached alkali component was prepared by the method described above. The mass of the alkali component was calculated by titration. When the proportion of the mass of the alkali component to the total of the mass of composite oxide N and the mass of the alkali component in the sample was calculated as the alkali component content, it was 0.31% by mass. The alkali component content in the composite oxide N contained in each positive electrode is shown in Table 1.

### <Peel Strength Measurement >

The peel strength of the positive electrode mixture layer from the positive electrode current collector was determined using a measuring device compliant with JIS Z0237 (2009). Specifically, each positive electrode was formed into a band-shaped sample with a width of 10 mm and a length of 50 mm or more, and one side of double-sided tape (No. 5606 manufactured by Nitto Denko Corporation) with a width of 20 mm and a length of 130 mm was attached to the positive electrode mixture layer of the sample. The other side of the double-sided tape was attached to a horizontal platform having a flat surface. One end of the positive electrode current collector in the length direction was fixed with a force gauge, and the positive electrode was pulled in the vertical direction at a rate of 50 mm/min to peel off the positive electrode mixture layer attached to the double-sided tape from the positive electrode current collector. The tension at that time was measured for 15 seconds or longer, and the average tension during the continuous 15-second period was calculated. The peel strength of each positive electrode is shown in Table 2 as a relative value with the peel strength of positive electrode C1 set to 100. The larger the relative value, the higher the peel strength and the better the performance of the positive electrode.

### (2) Negative Electrode Production

A negative electrode slurry was prepared by mixing a negative electrode active material, sodium carboxymethyl cellulose (CMC-Na), styrene-butadiene rubber (SBR), and water in a predetermined mass ratio. Graphite was used as the negative electrode active material. Next, the negative electrode slurry was applied to the surfaces of a copper foil (negative electrode current collector) to form a laminate including the copper foil and coated films formed on the copper foil. Next, the coated films were dried, and then the resulting laminate was rolled. In the manner described above, a negative electrode including the copper foil and negative electrode mixture layers formed on both surfaces of the copper foil was formed.

### (3) Electrolyte solution (Nonaqueous Electrolyte) Preparation

An electrolyte solution was prepared by adding LiPF₆ (lithium salt) to a nonaqueous solvent. The concentration of LiPF₆ in the electrolyte solution was set to 1.0 mol/L. As the nonaqueous solvent, a mixed solvent containing ethylene carbonate (EC) and ethyl methyl carbonate (EMC) in a volume ratio EC:EMC of 3:7 was used.

### (4) Secondary Battery Fabrication

A lead was attached to each of the positive electrode and the negative electrode described above. Next, an electrode group was produced by spirally winding the positive electrode, the negative electrode, and a separator such that the separator was interposed between the positive electrode and the negative electrode. Next, the electrode group and the nonaqueous electrolyte were housed in a cylindrical battery case. In the manner described above, cylindrical batteries A1 to A4 of Examples respectively including positive electrodes A1 to A4 and batteries C1 and C2 of Comparative Examples respectively including positive electrodes C1 and C2 were fabricated.

### [Evaluation]

The discharge capacity, internal resistance, and capacity degradation rate of each battery were measured. Relative values with the evaluation result of battery C1 set as 100 are shown in Table 2. A larger value of discharge capacity is more favorable, and smaller values of internal resistance and capacity degradation rate are more favorable.

### <Discharge Capacity>

Each battery was charged in an environment at 25°C at a constant current equivalent to 0.5 It until the battery voltage reached 4.2 V, and then charged at a constant voltage of 4.2 V until the current value reached equivalent to 0.05 It. After a 10-minute pause following the charging, the battery was discharged at a constant current equivalent to 0.2 It until the battery voltage reached 2.5 V, and the capacity was determined.

### <Capacity Decrease Rate>

The above charge-discharge cycle was repeated 300 times, and the decrease rate of the discharge capacity at the 300th cycle relative to the discharge capacity at the 5th cycle was determined.

### <Internal Resistance>

In an environment at a temperature of 25°C, each battery was charged at a constant current of 0.3 It until the battery voltage reached 4.2 V, and then charged at a constant voltage of 4.2 V until the current reached 0.05 It. Subsequently, the battery was discharged at a constant current of 0.3 It for 100 minutes to adjust the state of charge (SOC) to 50%.

For the battery at 50% SOC, the voltages after discharge at currents of 0 A, 0.1 A, 0.5 A, and 1.0 A for 10 seconds were respectively measured. The internal resistance (DCIR) was calculated from the absolute value of the slope when the relationship between the current value during the discharging and the voltage value after 10 seconds was approximated to a straight line by the least squares method.

**[Table 1]**

| | Organic additive | | | | Positive electrode mixture | |
|---|---|---|---|---|---|---|
| | PZ | Mass (%) | Decomposition temperature (°C) | Molecular weight | Alkali component (% by mass) | Degree of polyene formation |
| A1 | PZ1 | 0.01 | 180 | 200 | 0.31 | 0.13 |
| A2 | PZ1 | 0.05 | 180 | 200 | 0.30 | 0.10 |
| A3 | PZ1 | 0.1 | 180 | 200 | 0.30 | 0.10 |
| A4 | PZ2 | 0.05 | 400 | 20000 | 0.30 | 0.17 |
| C1 | - | - | - | - | 0.31 | 0.27 |
| C2 | - | - | - | - | 0.09 | 0.15 |

**[Table 2]**

| | Evaluation | | | | |
|---|---|---|---|---|---|
| | Viscosity increase rate (%) | Peel strength | Capacity | Resistance | Decrease rate |
| A1 | 240 | 97 | 100 | 100 | 80 |
| A2 | 200 | 97 | 100 | 100 | 78 |
| A3 | 190 | 90 | 99 | 100 | 83 |
| A4 | 270 | 79 | 100 | 102 | 89 |
| C1 | 390 | 100 | 100 | 100 | 100 |
| C2 | 250 | 102 | 100 | 105 | 122 |

As is clear from the comparison between Examples 1 to 4 and Comparative Example 1, the viscosity increase rate was significantly reduced as a result of the organic additive being contained in the positive electrode slurry. Also, it can be understood that while the viscosity increase rate decreases as the amount of the organic additive increases, it is desirable that the amount of the organic additive is not too large in terms of battery performance such as discharge capacity and capacity decrease rate. Furthermore, it is understood that the organic additive desirably has a moderate thermal decomposition temperature and a moderate molecular weight in terms of peeling strength. In addition, as battery C2 indicates, it can be understood that the alkali component of the composite oxide N can be removed to some extent by water washing but water washing of the composite oxide N increases the internal resistance of the battery and also increases the capacity decrease rate.

### [Industrial Applicability]

The positive electrode for a secondary battery according to the present disclosure can be used for high-performance nonaqueous electrolyte secondary batteries.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: secondary battery (nonaqueous electrolyte secondary battery)

## Claims

1. A positive electrode for a secondary battery, comprising
a positive electrode mixture containing a positive electrode active material and a binder,
wherein the positive electrode active material includes a lithium-containing composite oxide containing at least Ni,
in the lithium-containing composite oxide, a proportion of Ni among metal elements other than Li is 80 at.% or more,
the lithium-containing composite oxide contains an alkali component in an amount of 0.2% by mass or more and 0.5% by mass or less,
the binder includes a fluorine-containing polymer, and
a degree of polyene formation of the fluorine-containing polymer is 0.2 or less.

2. The positive electrode for a secondary battery according to claim 1,
wherein the lithium-containing composite oxide further contains Co and Mn.

3. The positive electrode for a secondary battery according to claim 2,
wherein the lithium-containing composite oxide further contains Al.

4. The positive electrode for a secondary battery according to any one of claims 1 to 3,
wherein the lithium-containing composite oxide is represented by a formula: Li_{y}NiₓM₍₁₋ₓ₎O_{2-δ}, where 0.8 ≤ x ≤ 1, 0 < y ≤ 1.2, and -0.05 ≤ δ ≤ 0.05, and
M includes at least one element selected from the group consisting of Co, Mn, Al, Fe, Ti, Sr, Ca, Zr, W, and B.

5. The positive electrode for a secondary battery according to claim 4,
wherein M is represented by a formula: Co_{1-x-a-b}MnₐAl_{b}, where 0 < a < 0.05 and 0 < b < 0.05.

6. The positive electrode for a secondary battery according to any one of claims 1 to 3,
wherein the positive electrode mixture further contains an organic additive containing a heteroatom, and
a proportion of a mass of the organic additive to a mass of the lithium-containing composite oxide is 0.1% by mass or less.

7. The positive electrode for a secondary battery according to claim 6,
wherein a decomposition temperature of the organic additive is 200°C or lower.

8. The positive electrode for a secondary battery according to claim 6,
wherein the organic additive is a Lewis base.

9. The positive electrode for a secondary battery according to claim 6,
wherein a molecular weight of the organic additive is 50 or more and 1000 or less.

10. A nonaqueous secondary battery comprising:
the positive electrode for a secondary battery according to any one of claims 1 to 3; a negative electrode; a separator; and a nonaqueous electrolyte.

11. A method for producing a positive electrode for a secondary battery, comprising:
preparing a positive electrode slurry containing a liquid medium and a positive electrode mixture dispersed in the liquid medium;
preparing a positive electrode current collector and forming a coated film of the positive electrode slurry on a surface of the positive electrode current collector; and
heating and drying the coated film at 200°C or lower,
wherein the positive electrode mixture contains a positive electrode active material, a binder, and an organic additive containing a heteroatom,
the positive electrode active material includes a lithium-containing composite oxide containing at least Ni,
in the lithium-containing composite oxide, a proportion of Ni among metal elements other than Li is 80 at.% or more,
the lithium-containing composite oxide contains an alkali component in an amount of 0.2% by mass or more and 0.5% by mass or less, and
the binder includes a fluorine-containing polymer.

12. The method for producing a positive electrode for a secondary battery according to claim 11,
wherein a decomposition temperature of the organic additive is 200°C or lower.

13. The method for producing a positive electrode for a secondary battery according to claim 11,
wherein the organic additive is a Lewis base.

14. The method for producing a positive electrode for a secondary battery according to any one of claims 11 to 13,
wherein a molecular weight of the organic additive is 50 or more and 1000 or less.

15. The method for producing a positive electrode for a secondary battery according to any one of claims 11 to 13,
wherein a proportion of a mass of the organic additive to a mass of the lithium-containing composite oxide is 0.002% by mass or more and 0.3% by mass or less.
